# FASCICULE DE BREVET EUROPEEN

(11) **EP 0 643 371 B1**
(45) Date de publication et mention de la délivrance du brevet: **08.10.1997**
(21) Numéro de dépôt: 94401940.5
(22) Date de dépôt: 31.08.1994
(51) Int. Cl.: G07F 7/02

(54) **Procédé de paiement électronique, notamment au moyen d'une carte à puce**
Verfahren zum elektronischen Bezahlen, insbesondere mittels einer Chipkarte
Electronic payment method, particularly with an IC-card

(30) Priorité: 02.09.1993 FR 9310477
(43) Date de publication de la demande: 15.03.1995
(73) Titulaire: GEMPLUS CARD INTERNATIONAL, F-13420 Gémenos (FR)
(72) Inventeur: Foglino, Jean-Jacques c/o Cabinet Ballot-Schmit, F-94230 Cachan (FR)
(74) Mandataire: Schmit, Christian Norbert Marie

(56) Documents cités:
- EP-A- 0 227 532
- EP-A- 0 345 108
- EP-A- 0 356 121
- EP-A- 0 378 454
- EP-A- 0 498 477
- GB-A- 2 191 029

## Description

La présente invention se rapporte aux procédés de paiement électronique, notamment à ceux qui utilisent comme support des moyens de paiement une carte comportant des circuits intégrés, connue plus généralement sous le nom de "carte à puce".

On a proposé pour payer de petites sommes d'argent au moyen d'un système électronique, dans le cadre du projet porte-monnaie électronique, d'utiliser une carte à mémoire dite "porte-jetons".

On sait que la carte à mémoire est un support plastique dont les dimensions sont conformes aux normes ISO 2894 et 3554. On a implanté sur ce support un ou plusieurs composants électroniques comprenant par exemple un microprocesseur, et surtout une mémoire de données d'une capacité de plusieurs centaines de bits, généralement réalisée en technologie EPROM. Dans le cadre de la carte à mémoire proprement dite, cette mémoire est à lecture seulement et programmable électroniquement une seule fois (en anglais ERASABLE PROGRAMMABLE READ ONLY MEMORY pour "EPROM").

Le traitement effectué dans une carte à mémoire du type "porte-jetons" consiste à faire correspondre à chaque bit d'une zone de la mémoire de données, une unité de paiement dite "jeton". La valeur de ce jeton sera déterminée en fonction des utilisations de la carte. Par exemple un bit correspondra à un jeton d'une valeur de un franc.

Le paiement s'effectue dans un terminal "point de vente" qui est muni d'un lecteur de carte et dans lequel on exécute une transaction en grillant dans la mémoire de données le nombre de bits nécessaires au paiement. Le grillage d'un bit consiste à faire passer électriquement un élément binaire de la mémoire de l'état binaire "1" correspondant au crédit d'une unité à l'état binaire "0" correspondant à un crédit nul ou réciproquement. Comme la mémoire de données est réalisée en technologie "EPROM", ce changement d'état est électriquement irréversible.

Le système de base ainsi décrit est simple et permet de bien comprendre le principe de la carte à jeton.

On a ultérieurement apporté des améliorations diverses à ce système, pour permettre par exemple de recharger des unités dans la carte, et pour réduire la consommation de bits. En effet, dans le système de base le nombre de bits grillés est égal au nombre d'unités à consommer et on est limité au paiement de petites sommes si l'on ne veut pas utiliser des composants pour le moment trop coûteux par rapport au but recherché.

Il est connu du document EP-A-0 378 454 un procédé de paiement électronique au moyen d'une carte à puce. La carte comporte un compteur de consigne, incrémentable de l'extérieur de la carte par une machine de rechargement de crédit, un comparateur qui compare le contenu de ce compteur de consigne avec un compteur de pages, le compteur de pages enregistrant le nombre de pages de P unités de compte déjà consommées. Un signal de fin de crédit est émis lorsque le contenu du compteur de pages atteint le contenu du compteur de consigne. Les chargements consistent à incrémenter le compteur de consigne pour augmenter le nombre de pages de P cellules qui peuvent être consommées dans la limite de la capacité de comptage du compteur de consigne. De préférence, le compteur de pages et le compteur de consigne sont strictement irréversibles.

Il existe toutefois des applications pour lesquelles un tel système de paiement ne convient pas. C'est en particulier le cas lorsque le détenteur de la carte est amené à se voir éventuellement attribuer des gains, ce qui modifie donc la valeur faciale de la carte. Une telle situation se présente en particulier dans le cas des machines de jeux où l'on consomme des jetons pour faire fonctionner la machine et où le résultat du jeu peut faire attribuer des jetons supplémentaires au joueur. Il s'agit d'une extension du système bien connu des parties gratuites dans les billards électrique du type "flipper".

Avec une carte à jeton du type connu, lorsque le joueur a réalisé un gain, il doit quitter la machine pour se faire payer le gain réalisé. S'il désire continuer à jouer, il doit alors engager une nouvelle partie et le nombre de jetons sur sa carte est à chaque fois débité d'autant jusqu'à épuisement de celle-ci, malgré les gains obtenus. Ces gains ne sont en général disponibles que sous la forme d'une carte gratuite contenant des jetons supplémentaires, ou éventuellement sous forme d'argent liquide remis à la caisse. Une telle interruption du jeu est aussi bien préjudiciable au joueur, qui ne souhaite pas en général s'arrêter, qu'à l'exploitant de la machine, qui a intérêt à ce que le joueur reste le plus longtemps possible devant la machine.

Pour résoudre ce problème, l'invention propose un procédé de paiement électronique tel que revendiqué en revendication 1.

D'autres particularités et avantages de l'invention apparaîtront clairement dans la description suivante, faite à titre d'exemple non limitatif en regard des figures annexées qui représentent :
- la figure 1, le schéma de principe d'une mémoire permettant de mettre en oeuvre le procédé selon l'invention ;
- la figure 2, le schéma d'un système informatique intégré sur une carte à puce pour mettre en oeuvre l'invention ; et
- la figure 3, la cartographie d'une mémoire permettant de mettre en oeuvre l'invention selon un mode de réalisation préféré.

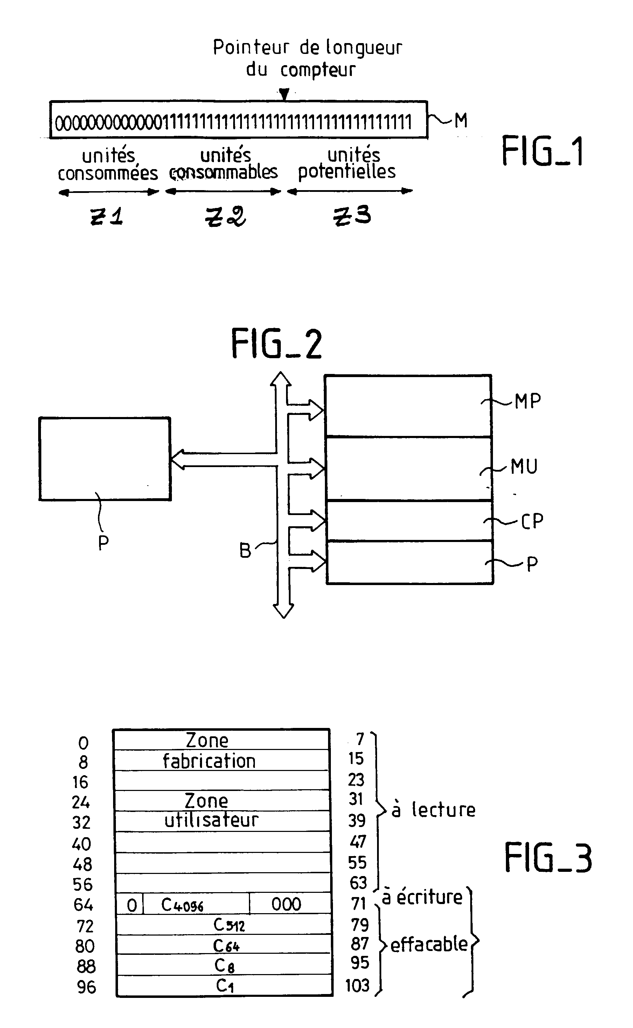

On a représenté sur la figure 1 de manière linéaire, l'ensemble des bits d'une mémoire M, de type EPROM, formant le coeur d'un système de paiement selon l'invention.

Dans cette mémoire, la zone Z1 comportant des "0" correspond aux unités qui ont déjà été consommées, la zone Z2 comportant des "1" correspond aux unités qui sont consommables, et la zone Z3, contenant elle aussi des "1" correspond aux unités potentielles qui pourront éventuellement être consommées en cas de gain obtenu par l'utilisateur du système.

Selon l'invention, la valeur faciale de la carte à puce comprenant la mémoire M correspond à une valeur donnée par la position d'un pointeur V qui délimite dans la mémoire M la frontière entre les zones Z2 et Z3. Cette valeur faciale est donc égale, lors de l'achat de la carte, à la valeur de la somme des zones Z1 plus Z2, la zone Z1 représentée sur la figure étant alors remplie de "1".

Lorsque l'utilisateur consomme des unités, la zone Z1 se constitue et s'agrandit petit à petit par grillage des bits de la mémoire M. Tant que le possesseur de la carte n'a pas obtenu de gain, le pointeur V reste fixe et la valeur faciale de la carte ne change pas.

Lorsque le possesseur de la carte se voit attribuer un gain de une unité, le pointeur se déplace, par modification du contenu d'un compteur par exemple, de une unité vers la droite sur la figure. Ceci modifie l'emplacement de la frontière entre les zones Z2 et Z3 en diminuant la zone Z3 et en augmentant la zone Z2. La valeur faciale de la carte augmente donc alors de une unité et l'utilisateur dispose donc d'une unité supplémentaire pouvant être consommée. Ceci correspond dans l'exemple élémentaire situé ci-dessus à l'attribution d'une partie gratuite. Bien entendu le pointeur peut se déplacer d'un nombre quelconque d'unités dans les limites de la longueur de la zone Z3.

On obtient donc une valeur faciale variable, uniquement dans le sens de l'augmentation de celle-ci, mais cette augmentation ne correspond pas à un rechargement de la mémoire et il n'y a donc aucune diminution du nombre d'unités consommées. Ce point essentiel permet d'éviter toutes les manipulations et toutes les possibilités de fraude qui viennent immédiatement à l'esprit lorsque l'on imagine un système rechargeable. On connaît bien entendu des dispositions permettant d'empêcher en principe toutes ces fraudes, mais elles sont en général compliquées à mettre en oeuvre, font perdre du temps d'exécution, et sont une source de coûts importants, en particulier à cause de la puissance de calcul à utiliser, surtout du côté de celle qui doit être intégrée dans la carte à puce.

On a représenté sur la figure 2 le schéma simplifié d'un système permettant de mettre en oeuvre le procédé selon l'invention.

Dans cet exemple, le système de paiement est réalisé au moyen d'un support de circuit intégré du type "carte à puce". Bien entendu on peut utiliser tout autre type de support.

Sur ce support on a placé essentiellement une mémoire comportant une zone MU dans laquelle ont été préalablement chargées des unités de paiement. Cette mémoire peut en outre comporter une mémoire de programme MP permettant de mettre en oeuvre l'application pour laquelle est prévue la carte. Il s'agit dans ce cas d'un programme de gestion des unités de paiement dans la mémoire d'unités MU. Ce programme est également prévu pour gérer un compteur d'unités CP et un pointeur P, ce compteur et ce pointeur correspondant classiquement au contenu de zones particulières CP et P de la mémoire. Le programme est en particulier apte à modifier la valeur du pointeur pour le faire passer d'une valeur initiale F à une valeur F + G, si G est le nombre d'unités à créditer, dans la mesure où F + G est inférieur ou égal à R, R étant le nombre réel d'unités chargées dans la mémoire MU.

La carte à mémoire peut en outre comporter, de manière connue, une unité de traitement P de type à microprocesseur, pour mettre en oeuvre les programmes d'application chargés dans la mémoire de programme MP. Dans le cas où la carte à mémoire ne comporte pas un tel microprocesseur P, les programmes sont mis en oeuvre par un microprocesseur situé, de manière connue, dans un lecteur de carte à puce non représenté sur la figure. Ce microprocesseur P est relié à la mémoire de manière connue par un bus B.

Selon un mode de réalisation préféré de l'invention, on utilise, comme représenté sur la figure 3, une mémoire unique de type à comptage d'unités permettant de réaliser les différentes fonctions précédemment décrites, c'est-à-dire la mémoire d'unités, le compteur et le pointeur. Cette mémoire sera par exemple du type commercialisé par la demanderesse sous la référence GPM 103. De façon plus générale on pourra utiliser une carte comportant un circuit intégré Siemens 4406, SGS-THOMSON 1305, ATMEL 88SC06, Philips 7960 ou tout autre circuit intégré équivalent.

Cette mémoire comprend en premier lieu une zone de 8 octets correspondant aux adresses de 0 à 63, qui est à lecture seulement et dans laquelle sont notamment mémorisées des informations relatives à la carte, au fabricant, et au client.

De façon plus précise, on divise généralement cette zone à lecture seulement en deux sous-zones: une sous-zone de fabrication où l'on inscrit généralement des informations telles que le type du composant, la version de celui-ci, les références du fabricant et du composant, celles de la carte, et le programme d'application ; une sous-zone utilisateur où l'on inscrit des données telles que le numéro de série de la carte, la date et le centre de distribution.

La mémoire comprend en outre une zone de comptage située entre les adresses 64 à 103 et qui est divisée en cinq étages de comptage comprenant chacun 8 octets et référencés sur la figure C1, C8, C64, C512 et C4096. Les quatre premiers étages C1 à C512 sont du type effaçable, c'est-à-dire que l'on peut effacer les bits qui y sont inscrits et ensuite ré-écrire un bit ultérieurement à ce même emplacement. Le cinquième étage C4096 est par contre à écriture uniquement compte-tenu de la manière dont le compteur est utilisé comme on va le voir. En outre ce cinquième étage comporte quatre cellules, la première et les trois dernières, qui sont écrites à "0" à la fabrication et qui ne peuvent plus être ré-écrites ensuite.

Cette zone de comptage est prévue pour fonctionner à la manière d'un boulier, c'est-à-dire que l'on écrit les cellules les unes après les autres en comptant à chaque fois un bit. Toutefois, comme une telle méthode ne permettrait de compter qu'un nombre réduit de bits, lorsqu'un étage est plein, à l'arrivée du bit suivant on inscrit celui-ci dans la première cellule de l'étage supérieur et on remet à zéro la totalité de l'étage inférieur. On continue ensuite à remplir cet étage inférieur jusqu'à ce qu'il soit plein, et ainsi de suite... Ainsi les cellules de l'étage C1 auront un poids 1, celle de l'étage C8 un poids 8 ... et les cellules de l'étage C4096 un poids 4096. Ceci explique la dénomination de ces étages.

Ce fonctionnement en boulier est bien connu et il est expliqué plus longuement dans la notice de la carte GPM 103, qui est disponible dans le public.

En outre, selon une caractéristique particulièrement intéressante pour l'invention, on peut découpler le fonctionnement des étages de poids faible par rapport à celui des étages de poids fort, de manière à utiliser ces étages de poids faible en compteur binaire ordinaire tout en gardant le fonctionnement des étages de poids fort en compteur du type boulier.

Cette caractéristique permet d'utiliser la zone de comptage de cette mémoire pour mettre en oeuvre l'invention.

Dans ce cas et selon un exemple particulier, on réservera pour le décompte des unités les étages C8 à C4096. Ce décompte se fera par inscription des bits les uns après les autres à partir du premier bit de l'étage C8 jusqu'au dernier bit inscriptible de l'étage C4096. On peut ainsi décompter un total de 2120 unités, ou jetons, compte-tenu des trois bits disponibles dans l'étage C4096.

Pour déterminer la valeur faciale de la carte, on utilisera alors le compteur C1 pour déterminer la valeur du pointeur fixant précisément la valeur faciale de la carte. Cette valeur faciale sera celle déterminée à la personnalisation de la carte avant sa distribution et ultérieurement la valeur faciale augmentera en fonction des gains éventuels obtenus par le porteur de la carte, par incrémentation du compteur C1.

Lors de l'utilisation de la carte, à chaque tentative d'incrémentation du compteur formé par les étages C8 à C4096, correspondant à une demande de consommation d'une unité, le système comparera la valeur atteinte par le compteur boulier à la valeur inscrite dans le compteur C1 et correspondant au pointeur. Le cas échéant cette valeur contenue dans C1 sera additionnée à une valeur fixe par le système d'exploitation pour ne pas partir du début du compteur boulier. Si la valeur dans le compteur boulier atteint celle correspondant au pointeur, le système refusera l'autorisation d'utilisation et la carte sera alors inutilisable. Le lecteur de carte comportera éventuellement un dispositif permettant d'indiquer au porteur de la carte qu'il a utilisé son crédit.

On constate néanmoins dans ce premier exemple d'utilisation de la carte GPM 103 que les huit bits de l'étage de comptage C1 ne permettent de définir que 256 adresses alors que le compteur boulier permet de décompter 2120 jetons. On peut alors prévoir différentes modalités d'utilisation du système selon les buts recherchés.

Selon une première variante, le système d'exploitation est prévu pour ajouter 1864 au contenu du pointeur, ce qui permet d'aller jusqu'à la valeur extrême du compteur boulier par incréments de une unité. Ceci correspond à un crédit initial relativement élevé et à une possibilité de gain relativement faible. Il est de toute façon nécessaire de prévoir un minimum d'unités consommables dès le départ.

Dans une deuxième variante, on prévoit que chaque incrémentation du compteur C1 correspond à un certain nombre d'unités du compteur boulier et que donc chaque gain donnera un nombre d'unités supplémentaires plus grand que "un". On peut ainsi, par exemple décider de fixer la valeur initiale du pointeur à 72 et fixer la valeur de chaque incrément de une unité du compteur C1 à 8 unités dans le compteur boulier.

Dans une troisième variante, on peut utiliser directement le nombre déterminé par le compteur C1 pour fixer l'adresse du bit correspondant dans le compteur boulier. C'est ainsi que si le compteur C1 contient le nombre 10, le pointeur désignera le deuxième bit du compteur C64. On constate que de cette manière, à chaque incrémentation du compteur C1 l'incrémentation du pointeur donne un gain de plus en plus fort chaque fois. Cette disposition peut être utile dans certains jeux pour augmenter l'intérêt du joueur au fur et à mesure que celui-ci gagne. Toutefois on peut limiter cette progression en incrémentant le compteur boulier lui-même du nombre d'unités nécessaire pour que la différence entre le déplacement du pointeur et le nombre d'unités consommées, y compris celles rajoutées ainsi, soit égale au gain obtenu.

On remarque d'ailleurs que dans ce cas les huit bits du compteur C1 permettent de déterminer un nombre d'adresses largement supérieur au nombre de bits dans le compteur boulier.

Il est alors intéressant, dans une sous-variante, de diviser ce compteur C1 en deux parties, une première partie comprenant cinq bits qui est largement suffisante pour déterminer l'adresse voulue dans le compteur boulier, et une deuxième partie contenant trois bits qui permettra de déterminer ces bits supplémentaires à incrémenter dans le compteur boulier.

Enfin on peut aussi utiliser la zone de comptage d'une autre manière, par exemple en réservant les deux compteurs C1 et C8 pour déterminer le pointeur et les trois compteurs C64 à C4096 pour déterminer le nombre d'unités consommables. On constate que dans ce cas, le système est déséquilibré dans l'autre sens par rapport à celui décrit plus haut, en ce sens que les possibilités d'adressage du pointeur sont nettement supérieures à celles du compteur boulier. Ce problème ne se pose que parce qu'on a décrit dans cet exemple l'utilisation d'une carte existante qui permet une mise en oeuvre facile et rapide par programmation de moyens matériels existants sur le marché. Elle n'enlève rien à la généralité de l'invention qui peut parfaitement être mise en oeuvre à l'aide de moyens matériels exactement adaptés à sa définition et dans lesquels on aurait une mémoire de pointeur exactement adaptée à la mémoire boulier.

## Revendications

1. Procédé de paiement électronique pour une machine de jeu au moyen d'un support de circuit intégré de type carte à puce comportant une mémoire formant un compteur, dans lequel on incrémente le compteur de manière irréversible par pas correspondant chacun à une unité de paiement, jusqu'à arriver à une valeur limite correspondant à la valeur faciale du support, on utilise un pointeur (V) déterminant cette valeur limite, on arrête l'incrémentation du compteur lorsque son contenu est égal à celui du pointeur et dans lequel on augmente la valeur faciale du support sans retrait de celui-ci de la machine de jeu par déplacement de la valeur du pointeur (V) dans le support, ce déplacement étant provoqué par un événement aléatoire correspondant à l'attribution d'un gain.

2. Procédé de paiement électronique selon la revendication 1, caractérisé en ce que la mémoire comporte initialement deux zones, une zone d'unités consommables correspondant à la valeur faciale de la carte et une zone d'unités potentiellement consommables, la frontière entre les deux zones étant définie par le pointeur.

3. Procédé selon la revendication 1 ou 2, caractérisé en ce que l'on utilise une mémoire unique (C1 - C4096) dont une partie (C8 - C4096) forme ledit compteur et dont une autre partie (C1) permet de mémoriser la valeur dudit pointeur.

4. Procédé selon la revendication 3, caractérisé en ce que la partie formant ledit compteur (C8 - C4096) est organisée sous forme de mémoire boulier.

5. Procédé selon l'une quelconque des revendications 1 à 4, caractérisé en ce que l'on utilise une carte à puce contenant une mémoire contenant ledit compteur (M) et ledit pointeur (V).

## Patentansprüche

1. Verfahren zum elektronischen Bezahlen für eine Spielmaschine mittels der Unterstützung eines integrierten Schaltkreises nach Art einer Chipkarte mit einem einen Zähler bildenden Speicher, indem der Zähler irreversibel um Schritte erhöht wird, die jeweils einer Zahlungseinheit entsprechen, bis man an einem Grenzwert ankommt, der dem auf dem Träger gezeigten Wert entspricht, wobei ein Zeiger (V) verwendet wird, der den Grenzwert bestimmt, wobei die Erhöhung des Zählers beendet wird, wenn sein Inhalt gleich dem des Zeigers ist, und man den genannten Wert des Trägers erhöht, ohne daß er aus der Spielmaschine zurückgezogen werden muß, indem der Wert des Zeigers (V) auf dem Träger ersetzt wird, wobei das Ersetzen durch ein zufälliges Ereignis entsprechend dem Zuteilen eines Gewinns veranlaßt wird.

2. Verfahren zum elektronischen Bezahlen nach Anspruch 1, dadurch gekennzeichnet, daß der Speicher anfänglich zwei Zonen aufweist, nämlich eine Zone mit aufbrauchbaren Einheiten entsprechend dem Nennwert der Karte, und eine Zone von möglicherweise aufbrauchbaren Einheiten, wobei die Grenze zwischen den beiden Zonen durch den Zeiger definiert ist.

3. Verfahren nach Anspruch 1 oder 2,
dadurch gekennzeichnet, daß man einen einzigen Speicher (C1 - C4096) verwendet, dessen einer Teil (C8 - C4096) den Zähler bildet und dessen anderer Teil (C1) das Speichern des Werts des Zeigers erlaubt.

4. Verfahren nach Anspruch 3,
dadurch gekennzeichnet, daß der Teil, der den Zähler (C8 - C4096) bildet, in Form eines Zählspeichers organisiert ist.

5. Verfahren nach einem der Ansprüche 1 bis 4,
dadurch gekennzeichnet, daß man eine Chipkarte verwendet, die einen Speicher aufweist, der den Zähler (M) und den Zeiger (V) aufweist.

## Claims

1. A method of electronic payment for a gaming machine using a medium for an integrated circuit of the chip card type, having a memory acting as an incremental counter which is incremented in irreversible steps, each corresponding to a unit of payment, until a threshold value corresponding to the face value of the medium is reached, wherein a pointer (V) is used to determine this threshold value and the counter ceases to be incremented when the status thereof is equal to the status of the pointer, in which the face value of the medium is increased without having to remove the medium, in which the pointer value (V) is moved in the gaming machine and this movement is triggered by a random event corresponding to a payment of winnings.

2. A method of electronic payment as claimed in claim 1, characterised in that the memory initially has two zones, a zone of consumable units corresponding to the face value of the card and a zone of potentially consumable units, the border between the two zones being determined by the pointer.

3. A method as claimed in claim 1 or 2, characterised in that a single memory (C1 - C4096) is used, one part (C8 - C4096) of which forms the said counter and the other part (C1) of which allows the value of the said pointer to be stored.

4. A method as claimed in claim 3, characterised in that the part forming the said counter (C8 - C4096) is organised in the form of an abacus memory.

5. A method as claimed in any one of claims 1 to 4, characterised in that a chip card containing a memory which incorporates the said counter (M) and the said pointer (V) is used.
